# EUROPEAN PATENT APPLICATION

(11) **EP 4 844 530 A1**
(43) Date of publication of application: **25.11.2026**
(21) Application number: 26173937.9
(22) Date of filing: 22.04.2026
(51) Int. Cl.: G06F 1/16, H04M 1/02, H04M 1/18

(54) **PROTECTIVE CASE FOR FOLDABLE MOBILE PHONE**

(30) Priority: 19.05.2025 KR 20250064881; 06.03.2026 KR 20260040461
(71) Applicant: Dussen Korea Co., Ltd., Incheon 21315 (KR)
(72) Inventor: Song, In Seong, 21378 Incheon (KR)
(74) Representative: Caspary, Karsten

(57) **Abstract**

Proposed is a protective case for a foldable mobile phone, in which a first case is mounted on one side of the foldable mobile phone and a side trim member is provided at a hinge portion, and the first case and the side trim member are connected by an elastic hinge unit, so that the exterior of the foldable mobile phone can be safely protected by the first case and the side trim member even during a folding operation of the foldable mobile phone. Folding and unfolding can be performed while being maintained in close contact with the corresponding portion, so that no clearance is generated, thereby allowing the protective case to be mounted on the foldable mobile phone with a sense of unity. The protective case includes: the first case; the side trim member provided on one side surface of the first case; and the elastic hinge unit.

## Description

### BACKGROUND OF THE INVENTION

### Field of the Invention

The present disclosure relates to a protective case for a foldable mobile phone, which is mounted on an exterior of the foldable mobile phone so that the exterior, including a display screen, can be safely protected from an external force.

### Description of the Related Art

Unless otherwise indicated herein, the matters described in this section do not constitute prior art to the claims of this application, and their inclusion in this section is not an admission that they constitute prior art.

With recent advances in information and communication technology, a foldable mobile phone having a foldable display has been gaining popularity. Such a foldable mobile phone is configured to be foldable in a left-right direction or an up-down direction about a hinge structure, and has advantages in that a large display screen can be utilized in various ways in an unfolded state and portability can be improved in a folded state.

Meanwhile, various types of protective cases have been used for mobile phones in order to prevent external damage, such as scratches, and to safely protect the mobile phones from unexpected external impacts. Such a general protective case for a mobile phone is usually configured in the form of a cover surrounding an outer side of the device to protect the device from various external impacts.

However, in the case of a foldable mobile phone, it is important to have a form in which characteristics of a folding structure are taken into consideration, rather than a form of a cover merely surrounding an outer side of the device. That is, since opposite bodies of the foldable mobile phone are folded about a hinge, there is a need for a case having a form in which both the bodies and the hinge portion can be safely protected during any operation of the foldable mobile phone. However, in most cases, a conventional protective case has not been able to actively pivot in conjunction with each side surface of the mobile phone or a portion adjacent to the hinge, and has remained in a fixed state.

As a result, when the mobile phone folds or unfolds, a part of the protective case interferes with the folding or unfolding of the mobile phone, or a region adjacent to the hinge or a part of a side surface is exposed to the outside, thereby causing the corresponding portion to be vulnerable to impact. In particular, although a side portion adjacent to the hinge is structurally prone to the formation of a gap and thus vulnerable to drop impact or ingress of foreign matter, there has been a problem in the related art in that it is difficult to stably protect that portion.

In addition, in the related art, a separate cover for covering the hinge portion has been applied. However, such a cover has not smoothly operated in conjunction with folding and unfolding of the mobile phone, or a clearance has been generated due to repeated folding and unfolding operations, thereby causing a problem in that protection performance is deteriorated during long-term use.

### Documents of Related Art

(Patent Document 1) Korean Patent Application Publication No. 10-2023-0038985 (published on Mar. 21, 2023)
(Patent Document 2) Korean Utility Model Registration No. 20-0495934 (published on Sep. 27, 2022)
(Patent Document 3) Korean Utility Model Registration No. 20-0498083 (published on Jun. 19, 2024)

### SUMMARY OF THE INVENTION

Accordingly, the present disclosure has been made keeping in mind the above problems occurring in the related art, and the present disclosure is intended to provide a protective case for a foldable mobile phone, portions of which are mounted respectively on a body portion and a hinge portion of the foldable mobile phone and operates in conjunction with folding and unfolding of the foldable mobile phone, while not only maintaining a state of being in close contact with the foldable mobile phone throughout an unfolding or folding operation but also enabling stable restoration of state.

In addition, the present disclosure is intended to provide a protective case for a foldable mobile phone, in which a plate spring portion for unfolding or folding a case unit is pulled by torsion spring portions through spring connection portions so that the case unit is automatically folded, and a case cover portion inserted into and coupled to a case recess so as not to protrude from the case unit protects the plate spring portion and the torsion spring portions.

In addition, the present disclosure is not limited to the technical objectives described above, and it will be apparent that other technical objectives may be derived from the following description.

In order to achieve the objectives of the present disclosure, according to an embodiment, there is provided a protective case for a foldable mobile phone, the protective case including: a first case detachably mounted on a first side of the foldable mobile phone, opposite sides of which are pivotable relative to each other so as to be foldable; a side trim member provided on one side surface of the first case in a longitudinal direction and configured to pivot in conjunction with folding and unfolding of the foldable mobile phone; and an elastic hinge unit having a first side seated on and fixed to the first case and a second side fastened and fixed to the side trim member, and configured to restore the side trim member, which pivots in conjunction with the folding and unfolding of the foldable mobile phone, by an elastic force.

In addition, according to another embodiment, there is provided a protective case for a foldable mobile phone, the protective case including: a case unit for protecting a mobile phone; a hinge case portion having one side coupled to the case unit; a hinge unit configured to couple the case unit and the hinge case portion such that the case unit and the hinge case portion are pivotable relative to each other; a plate spring portion coupled to the hinge unit and configured to extend or contract so as to couple the case unit and the hinge case portion such that the case unit and the hinge case portion are pivotable relative to each other; and torsion spring portions coupled to a case recess formed in the case unit and connected to the plate spring portion to pull the plate spring portion.

According to a preferred feature of the present disclosure, the case unit may include case protrusions formed to protrude in the case recess such that one side of each of the torsion spring portions is fitted around, coupled to, and supported by a corresponding one of the case protrusions.

According to a preferred feature of the present disclosure, the hinge unit may include: a body portion having a first side coupled to the hinge case portion and a second side including a curved surface; and guide portions coupled to the body portion and the hinge case portion and configured to guide the plate spring portion to be seated and moved.

According to a preferred feature of the present disclosure, the case unit may include shaft grooves, and the hinge unit further comprises a rotary shaft portion inserted into shaft holes formed in the body portion and the guide portions, and inserted into and coupled to the shaft grooves to rotate therein.

According to a preferred feature of the present disclosure, the protective case may further include: spring connection portions coupled to the plate spring portion and the torsion spring portions, wherein the torsion spring portions may pull the spring connection portions so as to pull the plate spring portion.

According to a preferred feature of the present disclosure, the protective case may further include: coupling portions configured to couple the plate spring portion to the hinge unit.

According to a preferred feature of the present disclosure, the protective case may further include: a case cover portion inserted into the case recess and configured to protect a part of the plate spring portion and the torsion spring portions.

According to the protective case for a foldable mobile phone according to an embodiment of the present disclosure as described above, the first case is mounted on one side of the foldable mobile phone and the side trim member is provided at a hinge portion, and the first case and the side trim member are connected by the elastic hinge unit, so that the exterior of the foldable mobile phone can be safely protected by the first case and the side trim member even during folding and unfolding of the foldable mobile phone. In addition, the folding and unfolding can be performed while being maintained in close contact with the corresponding portion, so that no clearance is generated, thereby allowing the protective case to be mounted closely and stably on the foldable mobile phone.

According to a protective case for a foldable mobile phone according to another embodiment of the present disclosure, the plate spring portion couples the case unit and the hinge case portion such that the case unit and the hinge case portion are pivotable to each other, and the torsion spring portions are coupled to the plate spring portion through the spring connection portions so as to pull the plate spring portion, thereby allowing the case unit to be automatically folded.

In addition, according to the protective case for a foldable mobile phone according to the another embodiment of the present disclosure, the case cover portion is inserted into and coupled to the case recess so as not to protrude from the case unit, thereby protecting the plate spring portion and the torsion spring portions, making a surface of the case unit flat, and reducing the thickness of the case unit, so that practicality and aesthetics can be improved.

Effects of the present disclosure are not limited to the effects mentioned above, and other effects not mentioned will be clearly understood by those skilled in the art from the description of the claims.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a perspective view illustrating a protective case for a foldable mobile phone according to an embodiment of the present disclosure;
FIG. 2 is an exploded perspective view illustrating the protective case for a foldable mobile phone according to the embodiment of the present disclosure;
FIG. 3 is a partially exploded perspective view illustrating the protective case for a foldable mobile phone according to the embodiment of the present disclosure;
FIG. 4 is an operational view illustrating the protective case for a foldable mobile phone according to the embodiment of the present disclosure;
FIG. 5 is a view illustrating a state in which the protective case for a foldable mobile phone according to the embodiment of the present disclosure is in use;
FIG. 6 is a perspective view illustrating a protective case for a foldable mobile phone according to another embodiment of the present disclosure;
FIG. 7 is an enlarged view of portion A of FIG. 6;
FIGS. 8 and 9 are exploded perspective views of main parts of the protective case for a foldable mobile phone according to the another embodiment of the present disclosure;
FIG. 10 is a perspective view illustrating an unfolded state of the protective case for a foldable mobile phone according to the another embodiment of the present disclosure;
FIG. 11 is an enlarged view of portion B of FIG. 10;
FIG. 12 is a cross-sectional perspective view taken along line CC of FIG. 11;
FIG. 13 is a perspective view of a torsion spring portion of the protective case for a foldable mobile phone according to the another embodiment of the present disclosure;
FIG. 14 is a view illustrating a coupled state of spring connection portions of the protective case for a foldable mobile phone according to the another embodiment of the present disclosure; and
FIG. 15 is a view illustrating a state in which the protective case for a foldable mobile phone according to the another embodiment of the present disclosure is in use.

### DETAILED DESCRIPTION OF THE INVENTION

Advantages and features of the present disclosure, and methods for achieving them, will become clear with reference to embodiments described below in detail together with the accompanying drawings. However, the present disclosure is not limited to the embodiments disclosed below and may be implemented in various different forms. These embodiments are provided only so that the disclosure of the present disclosure is complete and so that the scope of the present disclosure is fully conveyed to those skilled in the art to which the present disclosure pertains, and the present disclosure is defined only by the scope of the claims. Throughout the specification, like reference numerals designate like components.

In describing embodiments of the present disclosure, detailed descriptions of known functions or configurations will be omitted when it is determined that such descriptions may unnecessarily obscure the gist of the present disclosure. In addition, terms used below are terms defined in consideration of functions in the embodiments of the present disclosure, and may vary depending on an operator's intention or practice. Accordingly, definitions of such terms should be made on the basis of the content throughout this specification.

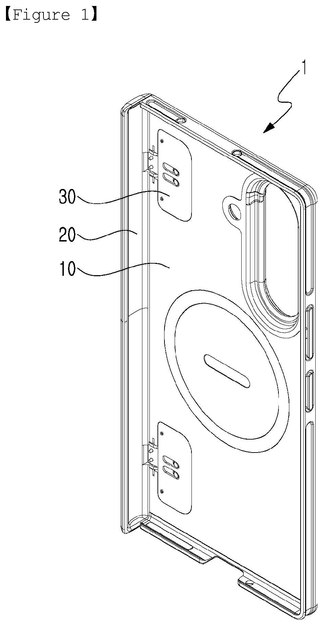

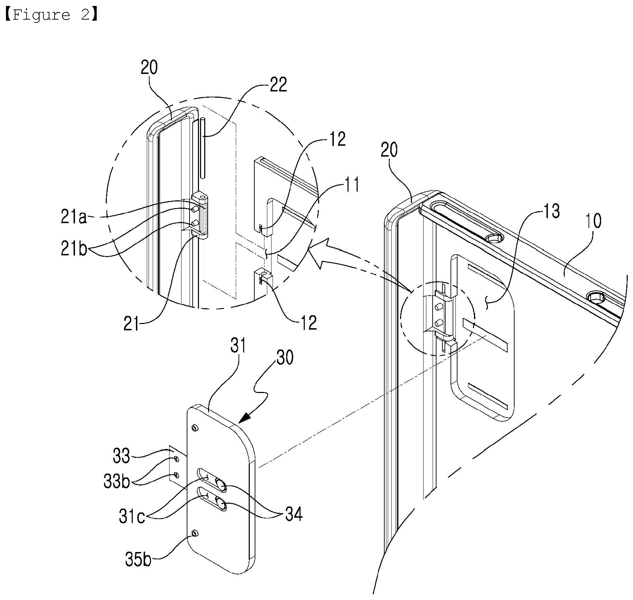

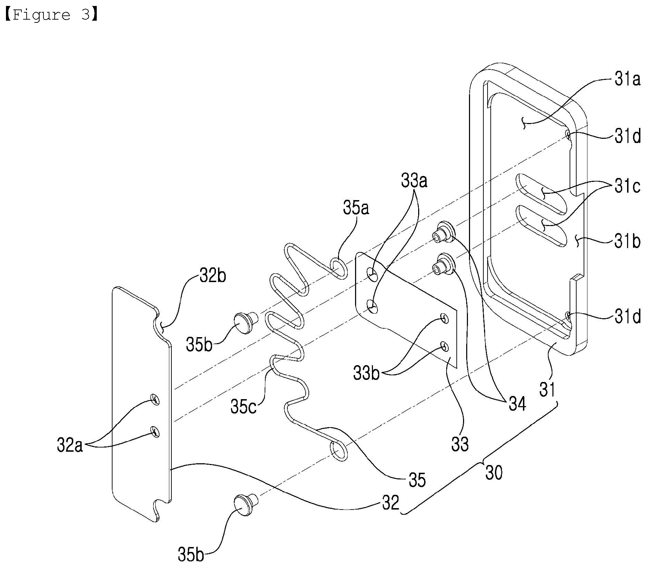

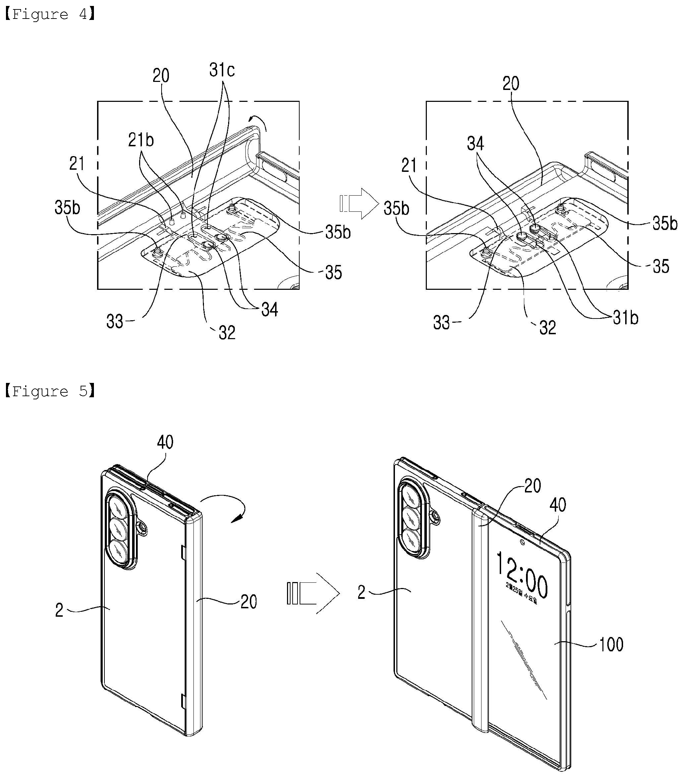

FIGS. 1 to 5 illustrate a protective case for a foldable mobile phone according to an embodiment of the present disclosure. FIG. 1 is a perspective view, FIG. 2 is an exploded perspective view, FIG. 3 is a partially exploded perspective view, FIG. 4 is an operational view, and FIG. 5 is a view illustrating a state of use.

Hereinafter, with reference to FIGS. 1 to 5, components of the protective case 1 for a foldable mobile phone according to the embodiment of the present disclosure, and connection relationships thereamong will be described in detail.

First, a first case 10 is provided. The first case 10 is detachably mounted on a first side of a foldable mobile phone 2, opposite sides of which are pivotable relative to each other so as to be foldable, and serves to safely protect the side on which the first case 10 is mounted from an external force.

The first case 10 is mounted on a side of the foldable mobile phone 2 on which no display is provided on the exterior thereof. Hinge grooves 11 are respectively formed to be recessed inward in upper and lower portions of one side edge of the first case 10, and shaft grooves 12 are formed on opposite sides of each of the hinge grooves 11. In addition, a mounting recess 13 is formed in an inner surface of the first case 10 described above, connected to the hinge groove 11 described above, and configured to seat and fix a first side of an elastic hinge unit 30 to be described later therein.

The first case 10 as described above is custom-made in a shape corresponding to the outer shape of the foldable mobile phone 2, and is formed of a transparent or translucent synthetic resin material, and the exterior of the first case 10 may be decorated with various colors and designs.

A side trim member 20 is provided at a hinge portion of the foldable mobile phone 2 on which the first case 10 described above is mounted so as to operate in conjunction therewith. The side trim member 20 is provided on one side surface of the first case 10 described above in a longitudinal direction thereof, and pivots in conjunction with folding and unfolding of the foldable mobile phone 2 so as to safely protect the corresponding side portion.

The side trim member 20 is formed such that a hinge protrusion 21 positioned in the hinge groove 11 described above protrudes outward from each of upper and lower portions of one side edge thereof, and the hinge protrusion 21 has a shaft hole 21a communicating with the shaft grooves 12 described above, the shaft hole 21a being formed through the hinge protrusion 21. A hinge shaft 22 is inserted into the shaft grooves 12 and the shaft hole 21a so as to allow the side trim member 20 to pivot relative to the first case 10 described above. In addition, fixing protrusions 21b are formed to protrude on a side of the hinge protrusion 21, a second side of the elastic hinge unit 30 to be described later being fastened and fixed to the fixing protrusions 21b.

Meanwhile, the elastic hinge unit 30 is provided between the first case 10 and the side trim member 20 described above. The elastic hinge unit 30 serves to allow the side trim member 20, which pivots in conjunction with folding and unfolding of the foldable mobile phone 2, to be restored by an elastic force, with a first side of the elastic hinge unit 30 being seated on and fixed to the first case 10 and a second side thereof being fastened and fixed to the side trim member 20. That is, when the foldable mobile phone 2 unfolds or folds in an unfolding direction or in a folding direction, the side trim member 20 is always pivoted in conjunction with the folding and unfolding movement of the foldable mobile phone 2 while being maintained in close contact with the hinge portion of the foldable mobile phone 2 without being spaced apart therefrom. In this case, when the foldable mobile phone 2 unfolds in the unfolding direction, the side trim member 20 is also pivoted in conjunction with the foldable mobile phone 2 in the unfolding direction by a force by which the foldable mobile phone 2 is unfolded, and when the foldable mobile phone 2 folds in the folding direction, the side trim member 20 is also pivoted in conjunction therewith in the folding direction by an elastic restoring force of the elastic hinge unit 30.

The elastic hinge unit 30 as described above includes: a cover 31 seated and fixed in the mounting recess 13, the cover 31 having a movement space 31a formed therein, an opening 31b formed at one side thereof so as to communicate with the hinge groove 11, and long holes 31c formed through an upper portion thereof; a moving member 32 movably positioned in the movement space 31a and having first fixing holes 32a formed therein; a connection piece 33 having a first side fixed to the moving member 32 with second fixing holes 33a formed in the first side, and a second side fixed to the fixing protrusions 21b in a state extending toward the hinge protrusion 21 through the opening 31b, with third fixing holes 33b fastened and fixed to the fixing protrusions 21b being formed in the extended second side; first fixing screws 34 penetrating and fastening the first fixing holes 32a and the second fixing holes 33a together so that the connection piece 33 is fixed to the moving member 32, head portions thereof being positioned in the long holes 31c so that movement of the moving member 32 is guided along the long holes 31c; and a bent tensile spring 35 having hooks 35a formed at opposite ends thereof and multiple bent portions 35c formed in a wave shape at an inner side thereof, wherein the hooks 35a at the opposite ends are fixed in the movement space 31a by second fixing screws 35b fastened to fourth fixing holes 31d formed in the cover 31, and the bent portions 35c at the inner side are interposed between the moving member 32 and the connection piece 33 and supported by the first fixing screws 34 so as to be compressed and restored by the moving member 32 which moves in both directions according to the pivoting of the side trim member 20.

Referring to FIG. 4, when the foldable mobile phone 2 unfolds in the unfolding direction, the side trim member 20 also pivots in the unfolding direction in conjunction therewith. In this time, the connection piece 33 is pulled outward, and the moving member 32 connected to the connection piece 33 also moves outward within the movement space 31a. In this case, the movement of the moving member 32 is guided by heads of the first fixing screws 34 moving along the long holes 31c formed in the cover 31, and at the same time, the bent tensile spring 35 is compressed inward.

Conversely, when the foldable mobile phone 2 begins to fold in the folding direction, the bent tensile spring 35, which is compressed when the foldable mobile phone 2 unfolds in the unfolding direction, is elastically restored, and in conjunction therewith, the side trim member 20 is also elastically restored and pivoted in the folding direction. That is, as a force pulling the connection piece 33 outward is gradually removed, the moving member 32 connected to the connection piece 33 is gradually moved inward in the movement space 31a by an elastic restoring force of the bent tensile spring 35. In this case, the movement of the moving member 32 is guided by the heads of the first fixing screws 34 moving along the long holes 31c formed in the cover 31.

In addition, inwardly recessed bent grooves 32b are formed in upper and lower portions of one side edge of the moving member 32 described above so as not to interfere with the second fixing screws 35b positioned in a direction in which the moving member 32 moves.

In addition, the connection piece 33 described above may be formed of a metal film having an elastic restoring force in the folding direction of the foldable mobile phone 2 so as to assist elastic restoring pivoting of the side trim member 20 by the bent tensile spring 35, or may be formed of a transparent synthetic resin film that is fastenable and fixable to a side of the hinge protrusion 21 without a sense of incongruity when the side trim member 20 is formed of a transparent synthetic resin.

Meanwhile, as illustrated in FIG. 5, a second case 40 is mounted on the second side of the foldable mobile phone 2, on the first side of which the first case 10 is mounted.

According to the protective case for a foldable mobile phone according to the embodiment of the present disclosure as described above, the first case 10 is mounted on the first side of the foldable mobile phone 2, and the side trim member 20 is provided at the hinge portion. The first case 10 and the side trim member 20 are connected to each other by the elastic hinge unit 30, and thus even during the folding operation, the exterior of the foldable mobile phone 2 can be safely protected by the first case 10 and the side trim member 20, and folding and unfolding can be performed while the first case 10 and the side trim member 20 are maintained in close contact with the corresponding portions of the foldable mobile phone 2, so that no clearance is generated, thereby allowing the protective case to be mounted on the foldable mobile phone 2 with a sense of unity.

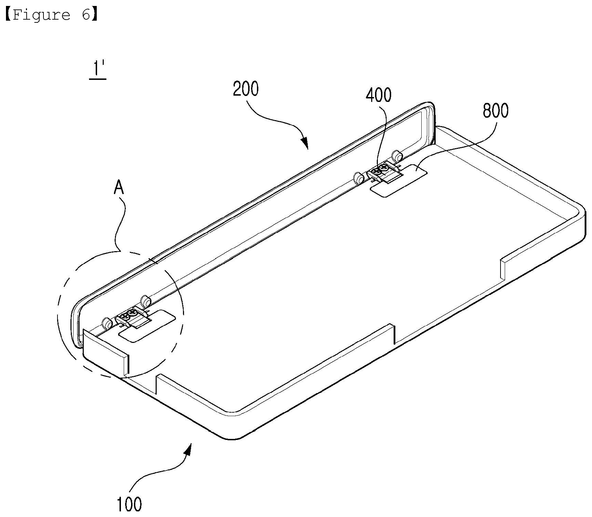

Hereinafter, components of a protective case 1' for a foldable mobile phone according to another embodiment of the present disclosure, and connection relationships thereamong, will be described in detail with reference to FIGS. 6 to 15.

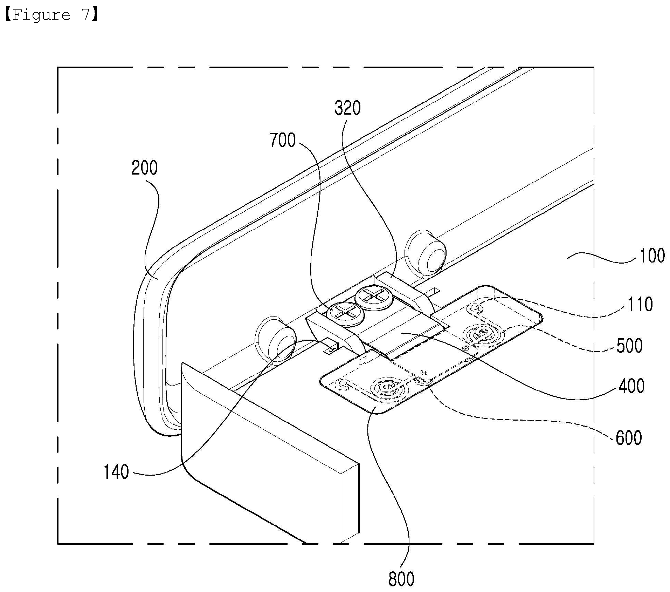

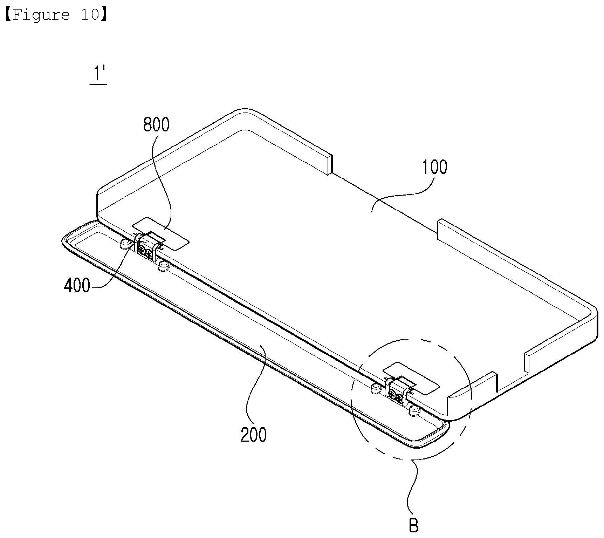

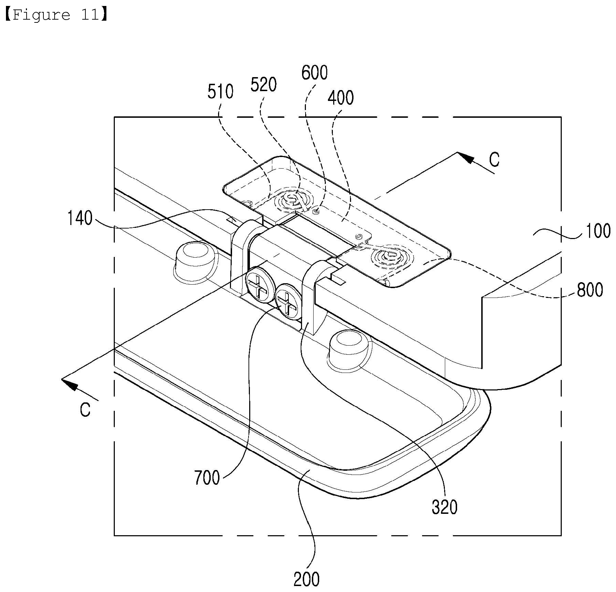

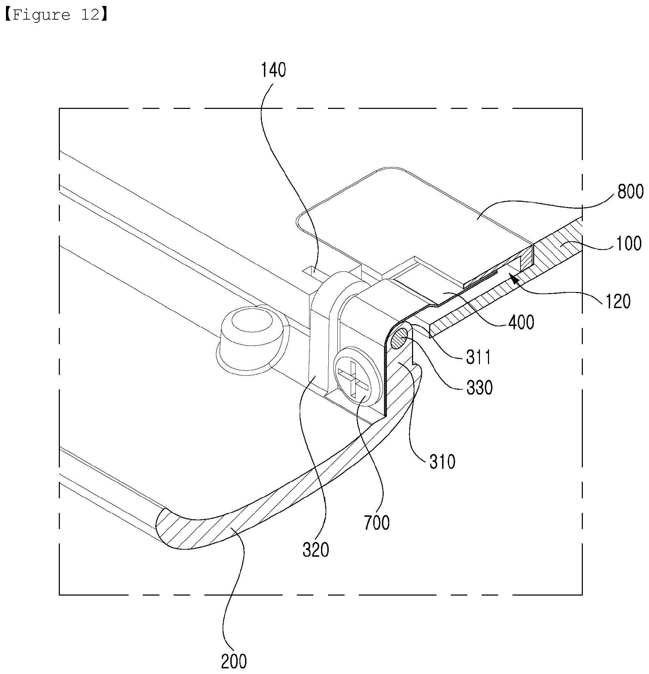

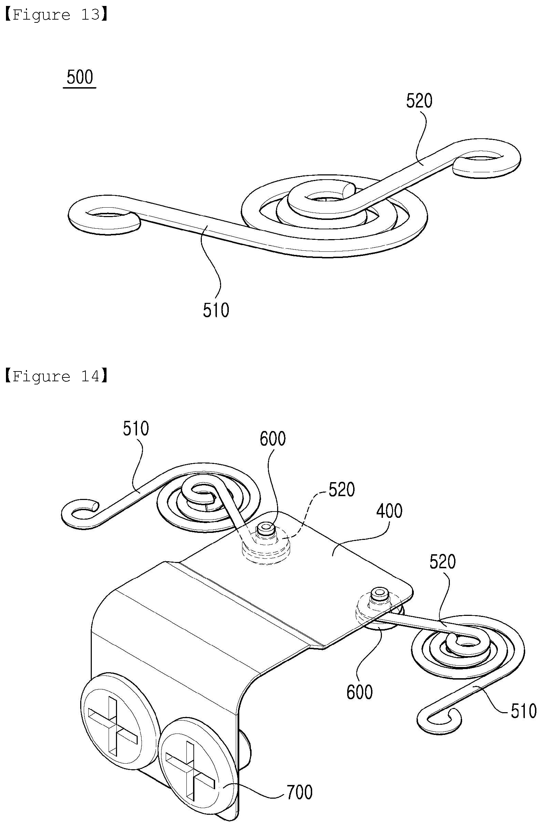

FIG. 6 is a perspective view of the protective case 1' for a foldable mobile phone according to the another embodiment of the present disclosure, FIG. 7 is an enlarged view of portion A of FIG. 6, FIGS. 8 and 9 are exploded perspective views of main parts of the protective case 1' for a foldable mobile phone according to the another embodiment of the present disclosure, FIG. 10 is an unfolded perspective view of the protective case 1' for a foldable mobile phone according to the another embodiment of the present disclosure, FIG. 11 is an enlarged view of portion B of FIG. 10, FIG. 12 is a cross-sectional perspective view taken along line CC of FIG. 11, and FIG. 13 is a perspective view of the torsion spring portion 500 of the protective case 1' for a foldable mobile phone according to the another embodiment of the present disclosure.

The protective case 1' for a foldable mobile phone according to the another embodiment of the present disclosure is configured such that a plate spring portion 400 for unfolding or folding a case unit 100 is pulled by the torsion spring portions 500 through spring connection portions 600 so that the case unit 100 is automatically folded, and such that a case cover portion 800 inserted into and coupled to a case recess 120 so as not to protrude from the case unit 100 protects the plate spring portion 400 and the torsion spring portions 500, thereby reducing the thickness of the case unit 100 and improving practicality and aesthetics, and may include the case unit 100, a hinge case portion 200, a hinge unit 300, the plate spring portion 400, the torsion spring portions 500, the spring connection portions 600, coupling portions 700, and the case cover portion 800.

The protective case 1' for a foldable mobile phone according to another embodiment of the present disclosure may include: the case unit 100 for protecting a mobile phone; the hinge case portion 200 having one side coupled to the case unit 100; the hinge unit 300 configured to couple the case unit 100 and the hinge case portion 200 such that the case unit 100 and the hinge case portion 200 are pivotable relative to each other; the plate spring portion 400 coupled to the hinge unit 300 and configured to extend or contract so as to couple the case unit 100 and the hinge case portion 200 such that the case unit 100 and the hinge case portion 200 are pivotable relative to each other; and the torsion spring portions 500 coupled to the case recess 120 formed in the case unit 100 and connected to the plate spring portion 400 to pull the plate spring portion 400. In this case, the case unit 100 may include case protrusions 110 formed to protrude in the case recess 120 such that one side of each of the torsion spring portions 500 is fitted around, coupled to, and supported by a corresponding one of the case protrusions. The hinge unit 300 may include: a body portion 310 having a first side coupled to the hinge case portion 200 and a second side including a curved surface 311; and guide portions 320 coupled to the body portion 310 and the hinge case portion 200 and configured to guide the plate spring portion 400 to be seated and moved. The case unit 100 may include shaft grooves 140, and the hinge unit 300 may further include a rotary shaft portion 330 inserted into shaft holes 331 formed in the body portion 310 and the guide portions 320, and inserted into and coupled to the shaft grooves 140 to rotate therein.

The case unit 100 serves as a case for protecting a mobile phone, and may include the case protrusions 110, the case recess 120, a hinge groove 130, and the shaft grooves 140. As an example, the case unit 100 may be formed in the shape of a rectangular plate corresponding to a shape of a foldable mobile phone that is foldable, and may be coupled to one side of the hinge case portion 200 to be described later so as to be folded or unfolded, thereby protecting the mobile phone.

As can be seen from the examples of FIGS. 6 to 8, the case recess 120 may be a recess in the case unit 100 in which the case protrusions 110, the plate spring portion 400, the torsion spring portions 500, and the spring connection portions 600, which will be described later, are received or coupled, and may be formed in a shape corresponding to the case cover portion 800 to be described later.

Each of the case protrusions 110 is formed to protrude in the case recess 120, and one side of the torsion spring portion 500 to be described later may be fitted around and coupled to the case protrusion 110. For example, the case protrusions 110 may be coupled to the torsion spring portions 500 to be described later to support the torsion spring portions 500.

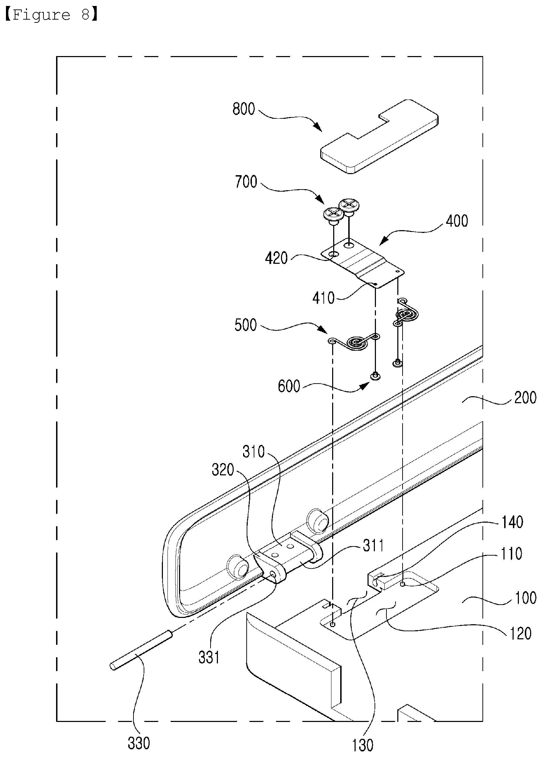

As can be seen from the example of FIG. 8, the hinge groove 130 may be a groove to which the hinge unit 300 to be described later is coupled, and may be formed in the case unit 100 so as to communicate with the case recess 120.

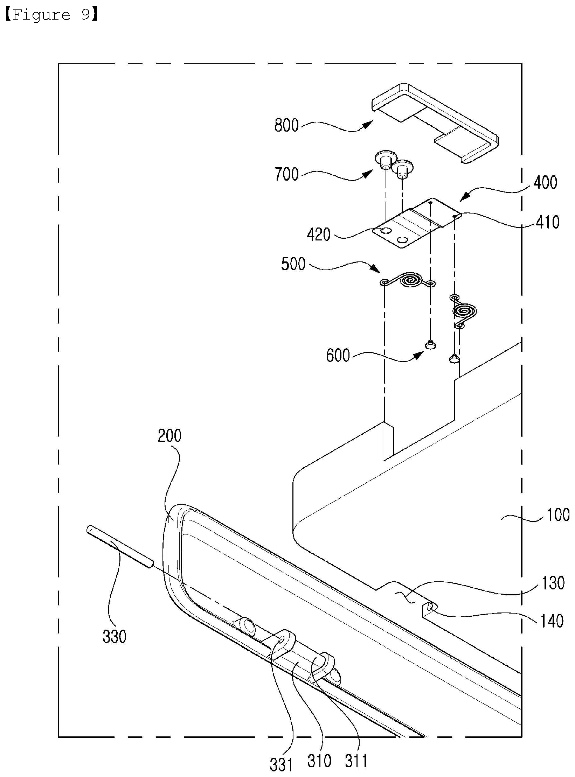

The shaft grooves 140 are grooves formed in the case unit 100 so as to communicate with the hinge groove 130, and the rotary shaft portion 330 to be described later may be rotatably inserted thereinto. As can be seen from the example of FIG. 8 or 9, each of the shaft grooves 140 may be formed in a shape corresponding to that of the rotary shaft portion 330 to be described later, and may have a circular lower portion with a larger diameter so that the inserted rotary shaft portion 330 is prevented from being separated.

The hinge case portion 200 has one side coupled to the case unit 100 and may serve to protect a portion of the mobile phone that is folded or unfolded.

The hinge unit 300 is coupled to the hinge case portion 200 and may be inserted into and coupled to the hinge groove 130 of the case unit 100 so as to couple the case unit 100 and the hinge case portion 200 such that the case unit 100 and the hinge case portion 200 are pivotable relative to each other, and may include the body portion 310, the guide portions 320, and the rotary shaft portion 330.

The body portion 310 constitutes a body of the hinge unit 300, and may has a first side coupled to the hinge case portion 200, and may include the guide portions 320 to be described later coupled to opposite sides thereof, and the shaft holes 331 formed therein.

As can be seen from the example of FIG. 8 or 9, each of the shaft holes 331 is a hole formed through the body portion 310 and the guide portions 320 to be described later, and the rotary shaft portion 330 to be described later may be inserted into the shaft holes 331.

For example, the body portion 310 may include holes into which the coupling portions 700 to be described later are inserted, and may be formed such that a second side of the body portion 310 includes a curved surface 311 along which the plate spring portion 400 to be described later slides, so that the plate spring portion 400 to be described later can slide smoothly.

The guide portions 320 have one side coupled to the hinge case portion 200 and are coupled to the opposite sides of the body portion 310, and may serve to guide sliding of the plate spring portion 400 to be described later.

As can be seen from the example of FIG. 7 or 11, the guide portions 320 may be coupled to the body portion 310 so as to protrude upward and downward from the body portion 310 so that the plate spring portion 400 to be described later is seated on the body portion 310, and may guide the plate spring portion 400 so that the plate spring portion 400 slides while extending or contracting.

As can be seen from the examples of FIGS. 6 to 12, the rotary shaft portion 330 is inserted into the shaft holes 331 formed in the body portion 310 and the guide portions 320, and opposite sides of the rotary shaft portion 330 may be inserted into and coupled to the shaft grooves 140 and rotate therein, thereby allowing the case unit 100 and the hinge case portion 200 to be pivotably coupled.

For example, the rotary shaft portion 330 may be formed protrude in a cylindrical shape from the guide portions 320 without the shaft holes 331 being formed in the body portion 310 or the guide portions 320, and may be inserted into the shaft grooves 140 so as to be rotatably coupled to the case unit 100.

The plate spring portion 400 has a first side coupled to the hinge unit 300 and a second side inserted into the case recess 120, and may serve to couple the case unit 100 and the hinge case portion 200 such that the case unit 100 and the hinge case portion 200 are pivotable relative to each other while the plate spring portion 400 extends or contracts, and may include coupling holes 420 and connection holes 410. For example, the plate spring portion 400 may have elasticity such that the case unit 100 or the hinge case portion 200 is folded or unfolded.

As can be seen from the examples of FIGS. 7 to 11, the coupling holes 420 are holes formed at the first side of the plate spring portion 400, the coupling portions 700 to be described later being inserted into the holes, and the connection holes 410 are holes formed at the second side of the plate spring portion 400, the spring connection portions 600 to be described later being inserted into the holes. For example, two coupling holes 420 and two connection holes 410 may be formed.

The torsion spring portions 500 are disposed in the case recess 120 formed in the case unit 100, and may be connected to the plate spring portion 400 and serve to pull the plate spring portion 400.

As can be seen from the examples of FIGS. 7 to 11 and FIGS. 13 and 14, each of the torsion spring portions 500 may have the first side fitted around and coupled to the case protrusion 110 so as to be fixedly supported, and the second side fitted around and coupled to a corresponding one of the spring connection portions 600, and accordingly, the torsion spring portions 500 pull the plate spring portion 400 in conjunction with pivoting of the case unit 100 or the hinge case portion 200 so that the case unit 100 can be folded.

As can be seen from the example of FIG. 8, 9, or 13, the torsion spring portion 500 may include: a lower torsion portion 510 having a central portion expanded into a circular shape having an increasing diameter, an outer side extending linearly, and an end portion formed in a loop shape so as to be coupled to the case protrusion 110; and an upper torsion portion 520 coupled to an upper side of the lower torsion portion 510, the upper torsion portion 520 having opposite sides formed in loop shapes and a linear portion therebetween, the linear portion thereof being coupled to the lower torsion portion 510 so as to be orthogonal to the linear portion of the lower torsion portion 510, and an outer loop portion thereof being coupled to the spring connection portion 600 to be described later.

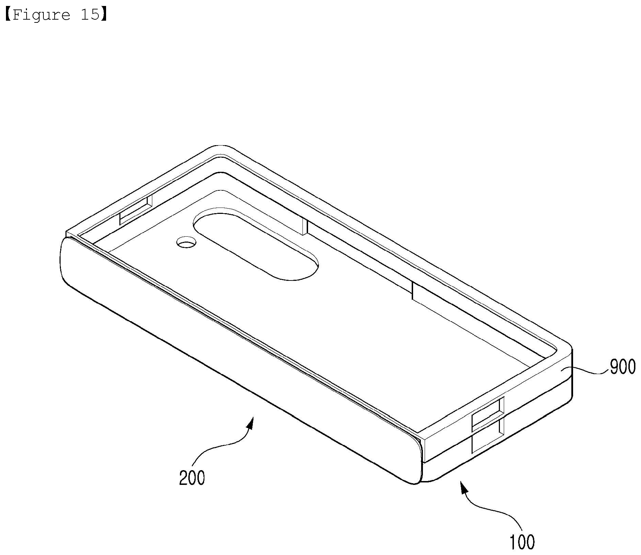

FIG. 14 is a view illustrating a coupled state of the spring connection portions 600 of the protective case 1' for a foldable mobile phone according to the another embodiment of the present disclosure, and FIG. 15 is a view illustrating a state in which the protective case 1' for a foldable mobile phone according to the another embodiment of the present disclosure is in use.

The protective case 1' for a foldable mobile phone according to the another embodiment of the present disclosure may further include the spring connection portions 600 coupled to the plate spring portion 400 and the torsion spring portions 500, the torsion spring portions 500 being configured to pull the spring connection portions 600 so as to pull the plate spring portion 400, and may further include the coupling portions 700 coupling the plate spring portion 400 to the hinge unit 300, and the case cover portion 800 inserted into the case recess 120 and protecting a part of the plate spring portion 400 and the torsion spring portions 500.

The spring connection portions 600 are coupled to the plate spring portion 400 and the torsion spring portions 500, and may serve to transmit a pulling force of the torsion spring portions 500 to the plate spring portion 400 so as to pull the plate spring portion 400.

In addition, as illustrated in FIG. 15, the protective case 1' for a foldable mobile phone according to the another embodiment of the present disclosure may further include a case cover 900 coupled to the other side of the foldable mobile phone (not shown), the other side being hinge-coupled to the one side of the foldable mobile phone to which the case unit 100 is coupled.

As can be seen from the example of FIG. 8 or 14, the spring connection portion 600 may have a lower head portion formed in a disk shape, and a body portion coupled to the head portion formed in a cylindrical shape having a smaller diameter than the head portion, the body portion being insertable into the connection hole 410 of the plate spring portion 400. For example, the loop portion of the upper torsion portion 520 may be fitted around the spring connection portion 600, and the plate spring portion 400 may be fitted onto and coupled to the spring connection portion 600 through the connection hole 410.

As can be seen from the example of FIG. 7 or 11, the spring connection portion 600 may move according to movement of the plate spring portion 400 and may pull the plate spring portion 400 through the torsion spring portion 500.

Each of the coupling portion 700 may serve to couple the plate spring portion 400 to the body portion 310. For example, the coupling portion 700 may be in the form of a screw and may be inserted into the coupling hole 420 of the plate spring portion 400 and the hole formed in the body portion 310 so as to couple the plate spring portion 400 to the hinge unit 300.

The case cover portion 800 is inserted into and coupled to the case recess 120, and may serve to protect a part of the plate spring portion 400 and the torsion spring portion 500.

As can be seen from the examples of FIGS. 7 to 9 and 12, the case cover portion 800 may be inserted into the case recess 120 so as to make a surface of the case unit 100 flat without a step, and may form an empty space with the case unit 100 such that the plate spring portion 400, the spring connection portion 600, and the torsion spring portion 500 move and the case protrusion 110 and the torsion spring portion 500 are disposed therein. For example, the case cover portion 800 may include a groove along which the plate spring portion 400 moves.

In the protective case 1' for a foldable mobile phone according to the another embodiment of the present disclosure, the plate spring portion 400 couples the case unit 100 and the hinge case portion 200 such that the case unit 100 and the hinge case portion 200 are pivotable relative to each other, and the torsion spring portion 500 is coupled to the plate spring portion 400 through the spring connection portion 600 so as to pull the plate spring portion 400, thereby folding the case unit 100. In addition, the case cover portion 800, which is inserted into and coupled to the case recess 120 so as not to protrude from the case unit 100, protects the plate spring portion 400 and the torsion spring portion 500, makes the surface of the case unit 100 flat, and reduces the thickness of the case unit 100, thereby improving practicality and aesthetics.

Preferred embodiments of the present disclosure have been described above with reference to the accompanying drawings. However, it should be understood that the embodiments described in this specification and configurations illustrated in the drawings are merely one most preferred embodiment of the present disclosure and do not represent all of the technical spirit of the present disclosure, and that various equivalents and modifications capable of replacing them may be present at the time of filing of this application. Accordingly, it should be understood that the embodiments described above are illustrative in all respects and not restrictive, and the scope of the present disclosure is defined by the claims set forth below rather than by the detailed description, and all changes or modified forms derived from the meaning and scope of the claims and equivalent concepts thereof should be construed as being included in the scope of the present disclosure.

## Claims

1. A protective case for a foldable mobile phone, the protective case comprising:
a first case detachably mounted on a first side of the foldable mobile phone, opposite sides of which are pivotable relative to each other so as to be foldable;
a side trim member provided on one side surface of the first case in a longitudinal direction and configured to pivot in conjunction with folding and unfolding of the foldable mobile phone; and
an elastic hinge unit having a first side seated on and fixed to the first case and a second side fastened and fixed to the side trim member, and configured to restore the side trim member, which pivots in conjunction with the folding and unfolding of the foldable mobile phone, by an elastic force.

2. The protective case of claim 1, wherein a second case is mounted on a second side of the foldable mobile phone, on the first side of which the first case is mounted.

3. The protective case of claim 1, wherein hinge grooves are respectively formed to be recessed inward in upper and lower portions of one side edge of the first case, and shaft grooves are formed on opposite sides of each of the hinge grooves.

4. The protective case of claim 3, wherein a hinge protrusion positioned in the hinge groove is formed to protrude outward from each of upper and lower portions of one side edge of the side trim member pivotably provided on the first case, and the hinge protrusion has a shaft hole communicating with the shaft grooves, the shaft hole being formed through the hinge protrusion.

5. The protective case of claim 4, wherein a hinge shaft is inserted into the shaft grooves and the shaft hole so as to allow the side trim member to pivot relative to the first case.

6. The protective case of claim 5, wherein a mounting recess is formed in an inner surface of the first case, connected to the hinge groove, and configured so as to seat and fix the first side of the elastic hinge unit therein, and fixing protrusions are formed to protrude on a side of the hinge protrusion, the second side of the elastic hinge unit being fastened and fixed to the fixing protrusions.

7. The protective case of claim 6, wherein the elastic hinge unit comprises:
a cover seated and fixed in the mounting recess, the cover having a movement space formed therein, an opening 31b formed at one side thereof so as to communicate with the hinge groove, and long holes formed through an upper portion thereof;
a moving member movably positioned in the movement space and having first fixing holes formed therein;
a connection piece having a first side fixed to the moving member with second fixing holes formed in the first side, and a second side fixed to the fixing protrusions in a state extending toward the hinge protrusion through the opening, with third fixing holes fastened and fixed to the fixing protrusions being formed in the extended second side;
first fixing screws penetrating and fastening the first fixing holes and the second fixing holes together so that the connection piece is fixed to the moving member, head portions thereof being positioned in the long holes so that the movement of the moving member is guided along the long holes; and
a bent tensile spring having hooks formed at opposite ends thereof and multiple bent portions formed in a wave shape at an inner side thereof, wherein the hooks at the opposite ends are fixed in the movement space by second fixing screws fastened to fourth fixing holes formed in the cover, and the bent portions at the inner side are interposed between the moving member and the connection piece and supported by the first fixing screws so as to be compressed and restored by the moving member which moves in both directions according to the pivoting of the side trim member.

8. The protective case of claim 7, wherein inwardly recessed bent grooves are formed in upper and lower portions of one side edge of the moving member so as not to interfere with the second fixing screws positioned in a direction in which the moving member moves.

9. A protective case for a foldable mobile phone, the protective case comprising:
a case unit for protecting a mobile phone;
a hinge case portion having one side coupled to the case unit;
a hinge unit configured to couple the case unit and the hinge case portion such that the case unit and the hinge case portion are pivotable relative to each other;
a plate spring portion coupled to the hinge unit and configured to extend or contract so as to couple the case unit and the hinge case portion such that the case unit and the hinge case portion are pivotable relative to each other; and
torsion spring portions coupled to a case recess formed in the case unit and connected to the plate spring portion to pull the plate spring portion.

10. The protective case of claim 9, wherein the case unit comprises case protrusions formed to protrude in the case recess such that one side of each of the torsion spring portions is fitted around, coupled to, and supported by a corresponding one of the case protrusions.

11. The protective case of claim 9, wherein the hinge unit comprises:
a body portion having a first side coupled to the hinge case portion and a second side including a curved surface; and
guide portions coupled to the body portion and the hinge case portion and configured to guide the plate spring portion to be seated and moved.

12. The protective case of claim 11, wherein the case unit comprises shaft grooves, and
the hinge unit further comprises a rotary shaft portion inserted into shaft holes formed in the body portion and the guide portions, and inserted into and coupled to the shaft grooves to rotate therein.

13. The protective case of claim 9, further comprising:
spring connection portions coupled to the plate spring portion and the torsion spring portions,
wherein the torsion spring portions pull the spring connection portions so as to pull the plate spring portion.

14. The protective case of claim 9, further comprising:
coupling portions configured to couple the plate spring portion to the hinge unit.

15. The protective case of claim 9, further comprising:
a case cover portion inserted into the case recess and configured to protect a part of the plate spring portion and the torsion spring portions.
